Europäisches Patentamt

European Patent Office

Office européen des brevets

(11) Veröffentlichungsnummer: **0 460 396 A2**

## (12) EUROPÄISCHE PATENTANMELDUNG

(21) Anmeldenummer: **91106983.9**

(22) Anmeldetag: **30.04.91**

(51) Int. Cl.5: **B60S 9/02**

(30) Priorität: **07.06.90 DE 4018236**

(43) Veröffentlichungstag der Anmeldung:
**11.12.91 Patentblatt 91/50**

(84) Benannte Vertragsstaaten:
**DE ES FR GB IT NL**

(71) Anmelder: **Haacon Hebetechnik GmbH
Josef-Haamann-Strasse 6
W-6982 Freudenberg/Main(DE)**

(72) Erfinder: **Riedl, Reinhold, Dipl.-Ing.
Von Berlichingen-Strasse 3
W-8760 Miltenberg(DE)**
Erfinder: **Lazarus, Konrad
Am Steiggraben 9
W-6982 Freudenberg(DE)**

(74) Vertreter: **Fuchs, Richard
Kantstrasse 18
W-8700 Würzburg(DE)**

(54) **Höhenverstellbare Stütze für Sattelauflieger oder dergleichen.**

(57) Um bei motorisch antreibbaren höhenverstellbaren Stützen (10) für Sattelauflieger den baulichen Aufwand zu verringern und zugleich eine schnelle und zuverlässige Arbeitsweise zu erreichen, ist im Hohlraum der Stütze (10) im wesentlichen achsparallel ein Betätigungszylinder (16) für das Stützen-Innenrohr (12) vorgesehen. Im Stützen-Außenrohr (11) ist eine Zahnstange oder teilverzahnte Stange (15) eingebaut. Am oberen Ende des Stützen-Innenrohres (12) ist eine Rastklinke (28) gelagert, die in der Arbeits- und Transportstellung des Stützen-Innenrohres (12) in entsprechende Zahnlücken (24, 38) der teilverzahnten Stange (15) eingreift, um die Stütze (10) in der Arbeits- bzw. Transportstellung zu verriegeln.

Fig.1

Die Erfindung bezieht sich auf eine höhenverstellbare Stütze für Sattelauflieger oder dergleichen, mit einem ortsfest angeordneten Außenrohr und einem im Außenrohr längsverschiebbar angeordneten Innenrohr, das an seinem äußeren Ende ein Fußteil, z.B. eine Fußplatte oder Rolle oder Rollsegment(e) trägt, wobei das Stützen-Innenrohr durch eine mit dem Stützen-Außenrohr verbundene, motorische Antriebsvorrichtung nach oben oder unten verstellbar ist.

Eine derartige höhenverstellbare Sattelaufliegerstütze ist durch die DE-PS 32 01 456 bekannt. Diese Stütze weist in bzw. an ihrem Kopfteil ein von handbetätigten Ausführungen her bekanntes Getriebe auf, welches in Antriebsverbindung mit einer pneumatischen Antriebsvorrichtung steht, die außen am Stützen-Außenrohr seitlich befestigt ist. Diese pneumatische Antriebsvorrichtung ist so ausgelegt, daß sie beim Aus- oder Einfahren der Stütze deren Getriebe über Schaltklinken nur diskontinuierlich antreiben kann, d.h., daß jeweils der Hub des Betätigungszylinders nur in einer Richtung zum Antrieb genutzt werden kann. Dadurch erhöht sich jedoch der Zeitaufwand für die Betätigung dieser Sattelaufliegerstütze und außerdem ist diese bekannte pneumatische Antriebsvorrichtung mit Klinkenradantrieb baulich relativ aufwendig sowie infolge ihres Anbaues von außen der Gefahr einer mechanischen Beschädigung durch z.B. Steinschlag im Fahrbetrieb des Sattelaufliegers ausgesetzt.

Durch die DE-PS 809 380 ist ferner eine Kraftfahrzeughebevorrichtung für Lastwagen und Anhänger bekannt, welche aus zwei Druckluft- oder Hydraulikzylinder besteht, die am Fahrzeugchassi befestigt sind. Der Nachteil dieser Konstruktion besteht darin, daß bei betätigter Hebevorrichtung die angehobene Last auf der Luft- oder Ölsäule in den beiden Zylindern steht. Dieser Umstand bringt die Gefahr mit sich, daß bei Undichtigkeiten in dem Druckluft- oder Hydrauliksystem die angehobene Last absinkt.

Der Erfindung liegt die Aufgabe zugrunde, eine baulich einfache, schnell und zuverlässig arbeitende, motorisch antreibbare Stütze für Sattelauflieger oder dergleichen unter Vermeidung außen liegender Antriebselemente zu schaffen.

Gemäß der Erfindung wird obige Aufgabe dadurch gelöst, daß

a) die motorische Antriebsvorrichtung für das Stützen-Innenrohr ein in den Hohlraum der Stütze im wesentlichen achsparallel eingebauter Betätigungszylinder oder motorischer Spindelantrieb ist, dessen Kolbenstange bzw. Antriebsspindel mit dem Stützen-Innenrohr verbunden ist,

b) im Stützen-Außenrohr ein Teil mit wenigstens einer Zahnlücke eingebaut ist und

c) am oberen Endbereich des Stützen-Innenrohres eine Rastklinke gelagert ist, die mit einer motorischen Betätigungsvorrichtung verbunden ist und mit ihrem Klinkenzahn in der ausgefahrenen Arbeitsstellung des Stützen-Innenrohrs in die Zahnlücke des im Stützen-Außenrohr eingebauten Teils einrastbar ist.

Eine Stütze mit diesen Merkmalen ist baulich einfach, was insbesondere für ihre motorischen Antriebsvorrichtungen für das Stützen-Innenrohr und die Rastklinke gilt. Darüber hinaus wird der Vorteil erreichte daß sowohl das Außenals auch Innenrohr der Stütze mit Abmessungen hergestellt werden können, wie sie bei gleichartigen handbetätigten Sattelauflieger-Stützen üblich sind. Dadurch wird die Lagerhaltung für die Stützen-Rohre von motorisch betätigbaren als auch handbetätigbaren Stützen vereinfacht und verbilligt. In vorteilhafter Weise sind ferner die motorischen Antriebsvorrichtungen für das Stützen-Innenrohr und die Rastklinke im Innern der Stütze geschützt eingebaut. Da die bisher üblichen Außengetriebe, d.h. seitlich vorgeschalteten Getriebe wegfallen, besteht somit geringerer Raumbedarf für die Stützen am Fahrzeug und es entfallen unfallträchtige Anbauteile, Druckmittelleitungen und dgl.. Im belasteten Zustand der Stütze wird die Last über die eingerastete Rastklinke vom Stützen-Außenrohr auf das ausgefahrene Stützen-Innenrohr zum Boden mechanisch formschlüssig abgetragen. Durch diese Maßnahme ist gewährleistet, daß die ausgefahrene Stütze die Last zuverlässig auf den Boden abträgt, wobei vorteilhaft Druck-Knick- und Biegekräfte von den Stützenrohren aufgenommen werden. Wenn die Stütze ihre Arbeitsstellung erreicht, kann die Rastklinke wahlweise z.B. durch Federkraft und/oder Eigengewicht und/oder durch ihre motorische Betätigungsvorrichtung in die Zahnlücke eingefahren werden, welche sich in dem am Stützen-Außenrohr befestigten Teil befindet. Wenn dann die Last über die Stütze auf dem Boden abgetragen wird, findet in der Stütze ein gewisser Setzvorgang statt, in dessen Verlauf die Rastklinke dann zuverlässig in die erwähnte Zahnlücke einrastet. Wenn die Stütze wieder eingefahren werden soll, wird zunächst die Rastklinke durch ihre motorische Betätigungsvorrichtung aus der Zahnlücke ausgehoben und anschließend wird der Betätigungszylinder aktiviert, um das Stützen-Innenrohr in seine Transportstellung einzufahren. In diesem Zustand kann das Stützen-Innenrohr durch beliebige Sicherungsmittel arretiert werden.

Ausgestaltungen der Erfindung gehen aus den Unteransprüchen hervor.

Eine besonders vorteilhafte Arretierung des Stützen-Innenrohrs im eingefahrenen Zustand erreicht man dadurch, daß das im Stützen-Außenrohr eingebaute Teil mit wenigstens zwei vertikal beabstandeten Zahnlücken versehen ist, und daß die Rastklinke in der Arbeits- und Transportstellung (Ruhestellung) des Stützen-Innenrohrs in jeweils eine dieser Zahnlücken einrastbar ist. Dieses Einrasten der Rastklinke kann in beiden Fällen, wie vorstehend beschrieben, erfolgen.

Eine bauliche Vereinfachung kann dadurch erreicht werden, daß das im Stützen-Außenrohr eingebaute und mit der Rastklinke zusammenarbeitende Teil durch eine nur teilverzahnte Stange gebildet ist. Eine solche teilverzahnte Stange aus z.B. Flachmaterial stellt ein preiswert herzustellendes Teil dar.

Nach noch einer weiteren Ausgestaltung der Erfindung kann das im Stützen-Außenrohr eingebaute und mit der Rastklinke zusammenarbeitende Teil auch durch eine Zahnstange gebildet sein.

Nach noch einer weiteren Ausführungsform der Erfindung ist am oberen Ende des Stützen-Außenrohrs eine Kopfplatte vorgesehen, an der die teilverzahnte Stange bzw. Zahnstange und der Betätigungszylinder oder der motorische Spindelantrieb befestigt sind. Die Kopfplatte überträgt vorteilhaft Stützkräfte und dient zugleich der Aufhängung der teilverzahnten Stange bzw. Zahnstange und des Betätigungszylinders bzw. Spindelantriebs.

Wenn nach noch einer weiteren Ausgestaltung der Erfindung die Kolbenstange des Betätigungszylinders bzw. Spindel des motorischen Spindelantriebs an ihrem freien Ende ein Ritzel trägt, das mit der im Stützen-Außenrohr eingebauten teilverzahnten Stange oder Zahnstange und einer am Stützen-Innenrohr befestigten Zahnstange kämmt, wird bei Aktivierung z.B. des Betätigungszylinders eine Verdoppelung der Hubgeschwindigkeit und des Hubes erreicht, was bedeutet, daß bei dieser Version der Erfindung das Stützen-Innenrohr relativ schnell aus- und einfahrbar ist. Dadurch ist es auch erst möglich, z.B. Stützen mit einem Hub von ca. 550 mm und einer Bauhöhe herzustellen, die den bisher bekannten handkurbelbetriebenen Stützen entsprechen, was aus Gründen der Wirtschaftlichkeit erwünscht und bei den gegebenen Höhenverhältnissen am Sattelauflieger erforderlich ist. Dieses Ritzel kann auch zur Arretierung des Stützen-Innenrohres in seiner Transportstellung dienen, da der Druckluft-Druck bzw. die Spindelhaltekraft des Motors das Ritzel höhenfest hält. Das bedeutet, daß neben der vorher beschriebenen Arretierung diese zusätzliche Arretierung wirkt.

Wenn es sich um eine Stütze aus Vierkantrohren handelt, können gemäß einer weiteren Ausführungsform der Erfindung der Betätigungszylinder und die teilverzahnte Stange bzw. Zahnstange seitlich nebeneinander am Stützen-Außenrohr befestigt sein, während die Zahnstange am Stützen-Innenrohr im wesentlichen diagonal gegenüber der teilverzahnten Stange bzw. Zahnstange am Außenrohr angeordnet wird.

Nach noch einer weiteren Ausgestaltung der Erfindung ist der Lagerabschnitt der Rastklinke seitlich von deren Klinkenzahn versetzt, wobei die Rastklinke mit einem bogenförmigen Abschnitt an dem Betätigungszylinder vorbei geführt ist. Dadurch wird ein besonders platzsparender Einbau der Rastklinke erreicht, die bei belasteter Stütze gleichwohl relativ hohe Gewichte übertragen kann.

Bei einer bevorzugten Ausführungsform der Erfindung werden der Betätigungszylinder für das Stützen-Innenrohr und auch die motorische Betätigungsvorrichtung für die Rastklinke mit Druckluft betrieben.

Der Betätigungszylinder des Stützen-Innenrohrs und die Betätigungsvorrichtung der Rastklinke sind vorzugsweise an der gleichen Druckluftquelle angeschlossen, z.B. an dem Druckluftvorrat für die Luftfederanlage oder Bremsanlage des Sattelaufliegers. Da die Stützen bekanntlich paarweise an Sattelaufliegern vorgesehen sind, entfällt bei dieser Betriebsart die bisher bei mechanischen Stützen erforderliche Verbindungswelle. Vorteilhaft können ferner zur Betätigung der Stützen die ohnehin am Sattelauflieger bzw. dessen Zugmaschine vorhandenen Druckluftquellen genutzt werden.

Gemäß noch einer weiteren Ausgestaltung der Erfindung werden der Betätigungszylinder des Stützen-Innenrohres und die Betätigungsvorrichtung der Rastklinke durch ein von Hand oder automatisch betätigbares Ventil so in Folge gesteuert, daß beim Ein- und Ausfahren des Stützen-Innenrohres zunächst die Betätigungsvorrichtung für die Rastklinke und dann mit etwas Verzögerung der Betätigungszylinder für das Stützen-Innenrohr aktiviert werden. Das spezielle Steuerventil bildet demzufolge vorteilhaft eine Sicherung gegen Fehlbetätigung.

Weitere vorteilhafte Funktionsabläufe gehen aus den Ansprüchen 12 und 13 hervor.

Wenn nach noch einer weiteren Ausgestaltung der Erfindung die Kolbenstange des Betätigungszylinders oder die Spindel des motorischen Spindelantriebs mit ihrem unteren freien Ende über ein im Stützen-Innenrohr befestigtes Anschlußstück direkt mit dem Stützen-Innenrohr verbunden ist, wird die Stütze baulich vereinfacht, bzw. teilesparender und damit entsprechend preiswert.

Wenn nach noch einer weiteren Ausführungsform der Erfindung am oberen Ende des Stützen-Außenrohres eine Kopfplatte angeordnet ist, an der das stangenförmige Teil mit wenigstens einer Zahnlücke befestigt ist und das stangenförmige Teil über eine angebaute Konsole den Betätigungszylinder oder den motorischen Spindelantrieb trägt, wird die Montage und Demontage des Betätigungszylinders, evtl. mit angeschlossenen Verteilern und/oder Ventilen vereinfacht.

Wenn die Betätigungszylinder der Stützen-Innenrohre und die Betätigungsvorrichtungen der Rastklinken über ein von Hand betätigbares Ventil an einem Druckluftvorrat des Bremssystems des Sattelaufliegers und ferner direkt an der Luftfederanlage des Sattelaufliegers anschließbar sind, wird ein halbautomatischer Betrieb der Stützen erreicht. Denn durch manuelle Steuerung des Ventils können die Stützen ausgefahren und während der Füllung der Luftfederung automatisch wieder eingefahren werden.

Eine vollautomatische Arbeitsweise der Stützen geht aus Anspruch 18 hervor.

Bei dem vorstehend erwähnten Betätigungszylinder für das Stützen-Innenrohr kann es sich wahlweise um eine pneumatische, hydraulische oder elektrische Ausführung für eine Linearbewegung handeln.

Die Erfindung wird anschließend anhand der Zeichnungen eines Ausführungsbeispiels erläutert. Es zeigen:

| | |
|---|---|
| Figur 1 | einen Längsschnitt einer erfindungsgemäßen Stütze im eingefahrenen und verriegelten Zustand; |
| Figur 2 | einen weiteren Längsschnitt der in Fig.1 gezeigten Stütze, jedoch im ausgefahrenen und verriegelten Zustand; |
| Figur 3 | eine Querschnittsansicht der Stütze entlang der Linie A - A in Fig.1; |
| Figur 4 | eine weitere Querschnittsansicht der Stütze entlang der Linie B - B in Fig.2; |
| Figur 5 | einen Teil-Längsschnitt vom oberen Endbereich der Stütze der Figur 1, jedoch mit ausgehobener Rastklinke; |
| Figur 6 | ein Schaltbild der pneumatischen Steuerung für die Betätigungszylinder der Stützen-Innenrohre und die Betätigungsvorrichtungen für die Rastklinken von zwei Stützen eines Sattelaufliegers, von welchen nur Teile der Innenrohre angedeutet sind und |
| Figur 7 | ein Schaltbild einer modifizierten pneumatischen Steuerung; |
| Figur 8 | einen Längsschnitt einer weiteren baulich einfachen Ausführungsform einer Stütze gemäß der Erfindung im eingefahrenen Zustand; |
| Figur 9 | einen weiteren Längsschnitt der in Fig.8 gezeigten Stütze, jedoch im ausgefahrenen und verriegelten Zustand; |
| Figur 10 | eine Querschnittsansicht der Stütze entlang der Linie A - A in Figur 9; |
| Figur 11 | eine weitere Querschnittsansicht |

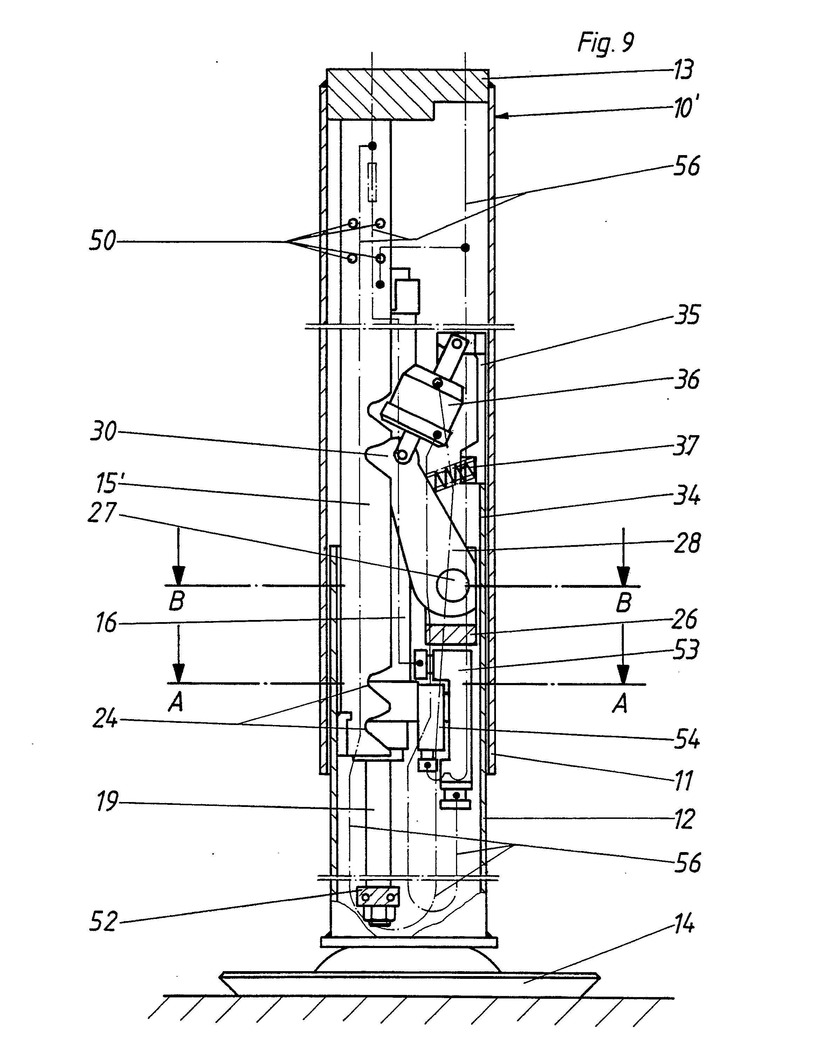

der Stütze entlang der Linie B - B in Figur 9;

| | |
|---|---|
| Figur 12 | einen Teil-Längsschnitt vom oberen Abschnitt der Stütze der Figuren 8 und 9, jedoch um 180° gegenüber den Figuren 8 und 9 gedreht; |
| Figur 13 | eine Querschnittsansicht entlang der Linie C- C in Figur 12; |
| Figur 14 | ein Schaltbild einer pneumatischen, handbetätigbaren Steuerung für die Betätigungszylinder der Stützen-Innenrohre und die Betätigungsvorrichtungen für die Rastklinken von zwei Stützen eines Sattelaufliegers, von welchen nur Teile der Innenrohre angedeutet sind, ähnlich der Steuerung nach Figur 6; |
| Figur 15 | ein Schaltbild einer weiteren halbautomatischen pneumatischen Steuerung, ähnlich Figur 7 und |
| Figur 16 | ein Schaltbild noch einer weiteren vollautomatisch arbeitenden pneumatischen Steuerung. |

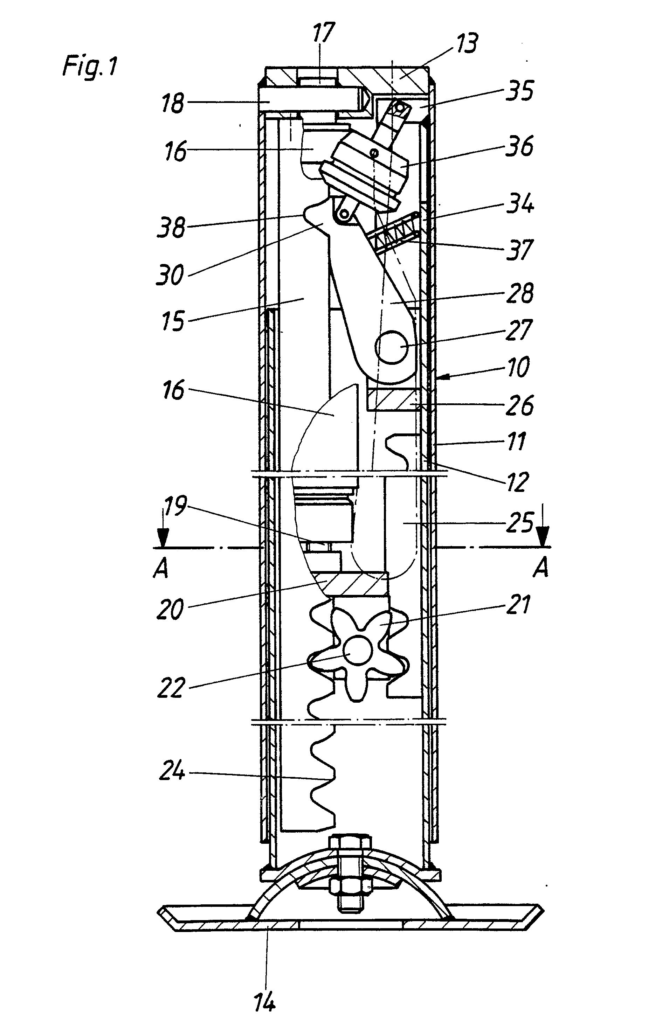

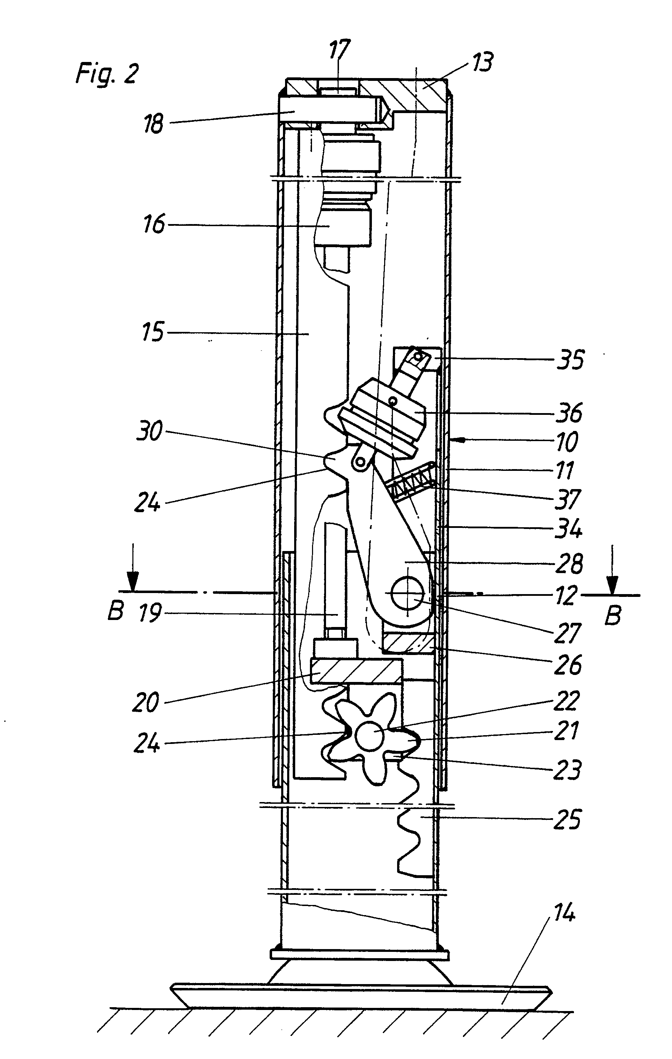

Die in den Figuren 1 und 2 gezeigte Stütze 10 wird paarweise am Rahmen eines Sattelaufliegers in dessen vorderen Bereich befestigt, und wenn der Sattelauflieger von seinem Zugfahrzeug abgekuppelt ist, wird er über die dann ausgefahrenen beiden Stützen 10 mit seinem vorderen Teil auf dem Boden aufgelagert. Die Stützen 10 eines jeden Paares an einem Sattelauflieger sind gleichartig und es genügt daher, eine derselben ausführlich zu beschreiben.

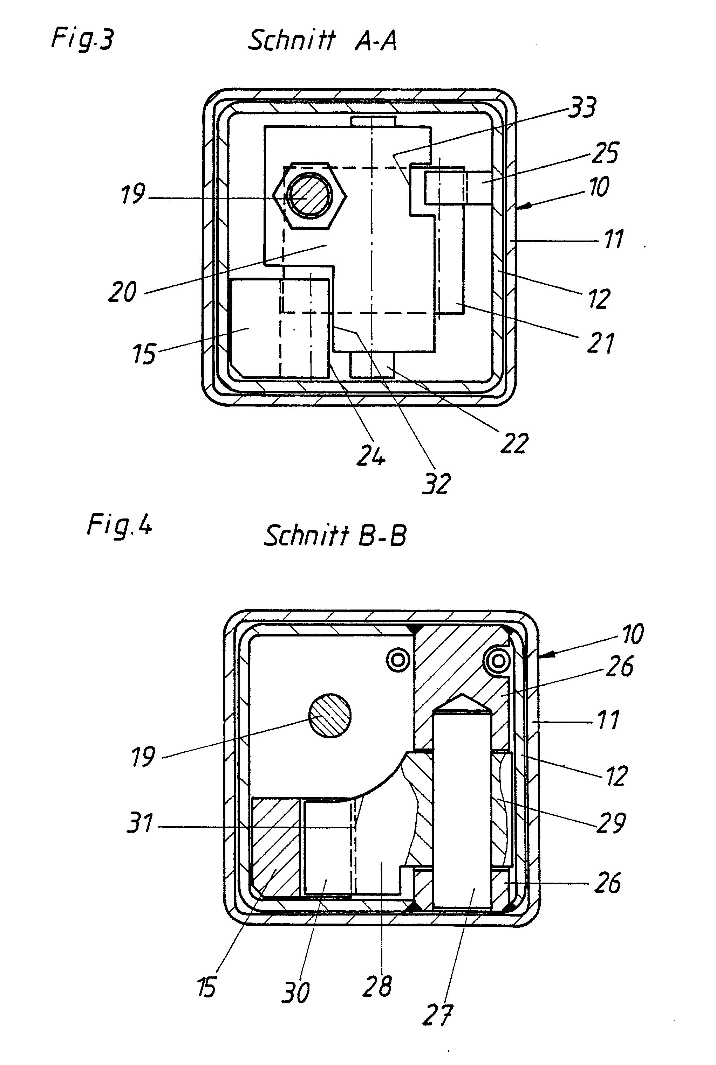

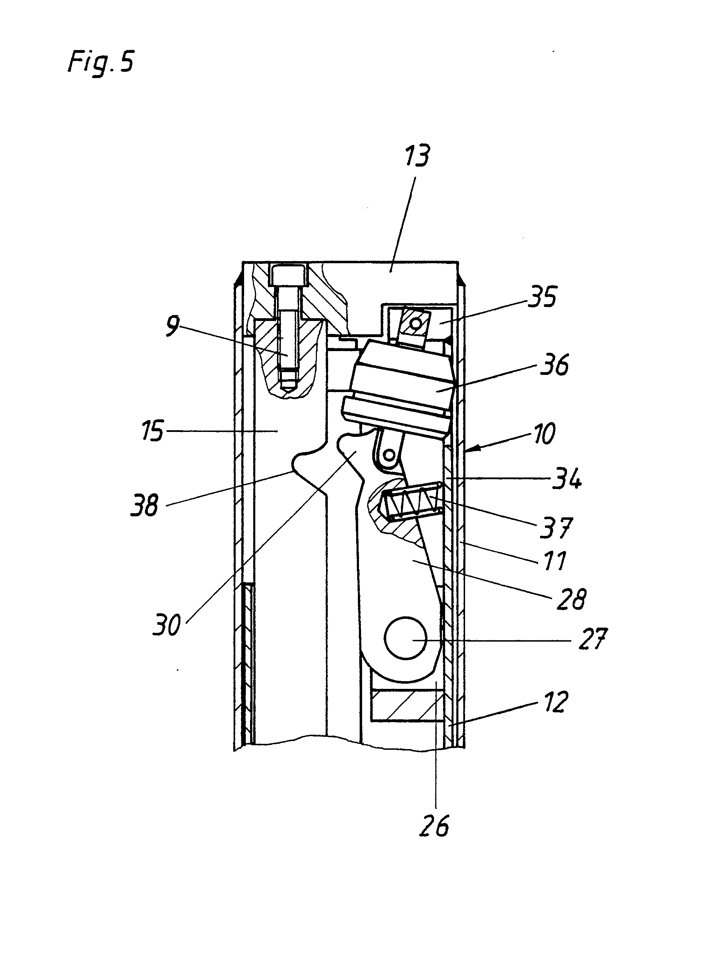

Die Stütze 10 weist ein Außenrohr 11 und ein in dem Außenrohr 11 längsverschieblich gelagertes Innenrohr 12 auf. Beide Stützen-Rohre 11, 12 bestehen vorzugsweise aus Vierkantrohren (Fig.3 und 4). Das Außenrohr 11 ist über nicht gezeigte Flansche an dem Rahmen des Sattelaufliegers befestigt und oben durch eine angeschweißte Kopfplatte 13 verschlossen. Das verschiebliche Innenrohr 12 trägt an seinem unteren Ende eine Fußplatte 14, an deren Stelle auch z.B. eine Rolle oder ein sog. Ausgleichsfuß vorgesehen sein kann. An der Kopfplatte 13 ist achsparallel eine teilverzahnte Stange 15 z.B. mit Schrauben 9 (Fig.5) befestigt, die fast die gleiche Länge wie das Außenrohr 11 und etwas Spiel gegenüber der Innenseite des Innenrohrs 12 hat. Seitlich neben der teilverzahnten Stange 15 ist beim Ausführungsbeispiel ein pneumatischer Betätigungszylinder 16 angeordnet, der an seinem oberen Ende ein Befestigungsauge 17 aufweist. Mittels eines sich durch dieses Befestigungsauge 17 erstreckenden Bolzens 18 ist der Betätigungszylinder 16 an der Kopfplatte 13 befestigt.

Die Kolbenstange 19 des Betätigungszylinders 16 ist an ihrem freien Ende mit einem Lagerstück 20 für ein Ritzel 21 verschraubt. Das Ritzel 21 ist mittels eines Bolzens 22 an zwei seitlich beabstandeten, nach unten ragenden Armen 23 des Lagerstücks 20 gelagert. Das Ritzel 21 kämmt mit einer Verzahnung 24 am unteren Teil der teilverzahnten Stange 15 sowie mit einer Zahnstange 25, die parallel zur Längsachse der Stützen 10 am Innenrohr 12 befestigt ist. Der Betätigungszylinder 16 ist demzufolge über die teilverzahnte Stange 15, das Ritzel 21 und die Zahnstange 25 mit dem Stützen-Innenrohr 12 antriebsmäßig verbunden, wobei der Betätigungszylinder 16 im wesentlichen parallel zur Längsachse der Stütze 10 in diese eingebaut ist.

Am oberen Ende des Stützen-Innenrohres ist an dessen Innenseite ein Lagerblock 26 befestigt, an dem mittels eines Bolzens 27 eine Rastklinke (Sperrklinke) 28 schwenkbar gelagert ist. Der Lagerabschnitt 29 dieser Rastklinke 28 ist seitlich von deren Klinkenzahn 30 versetzt und die Rastklinke 28 ist mit einem bogenförmigen Abschnitt 31 an dem Betätigungszylinder 16 vorbeigeführt. Die Zahnstange 25 am Stützen-Innenrohr 12 ist ferner im wesentlichen diagonal gegenüber der teilverzahnten Stange 15 angeordnet. Das durch den Betätigungszylinder 16 auf- und abbewegbare Lagerstück 20 weist entsprechende Aussparungen 32 und 33 auf, in welche sich die teilverzahnte Stange 15 bzw. die Zahnstange 25 erstreckt.

An einem Fortsatz 34 am oberen Ende des Innenrohres 12 ist ein Lagerstück 35 für eine pneumatische Betätigungsvorrichtung 36 angeschweißt. Die pneumatische Betätigungsvorrichtung 36 in Form eines Zylinders mit eingebautem Kolben ist zwischen dem Lagerstück 35 und dem oberen Ende der Rastklinke 28 gelenkig eingespannt bzw. angeordnet. Die Betätigungsvorrichtung 36 dient zum Ausheben der Rastklinke 28, d.h. also zur Drehung der Rastklinke 28 im Uhrzeigersinn, während die Drehung der Rastklinke 28 entgegen dem Uhrzeigersinn in ihre Wirkstellung durch eine zwischen der Rastklinke 28 und dem Fortsatz 34 des Innenrohres 12 eingespannte Druckfeder 37 bewirkt wird. Die Rastklinke 28 greift mit ihrem Klinkenzahn 30 in der Transportstellung (Fig.1) des Stützen-Innenrohrs 12 in eine Zahnlücke 38 in der teilverzahnten Stange 15 ein, und zwar unter dem Druck der Feder 37, wodurch das Stützen-Innenrohr 12 in der Transportstellung gesichert ist. Umgekehrt rastet die Rastklinke 28 mit ihrem Klinkenzahn 30 in der (ausgefahrenen) Arbeitsstellung des Stützen-Innenrohrs 12 (Fig.2) in eine Zahnlücke der Verzahnung 24 ein. Auf diese Weise wird die von der Stütze 10 zu übertragende Last vorteilhaft über die Kopfplatte 13, die teilverzahnte Stange 15, die Rastklinke 28 und das Stützen-Innenrohr 12 auf die Fußplatte 14 und von dieser auf den Boden abgetragen, wobei Knick- oder Biegekräfte von dem Außen- und Innenrohr 11, 12 der Stütze 10 aufgenommen werden. Das Ritzel 21 könnte auch mit einer zusätzlich im Stützen-Außenrohr (11) eingebauten Zahnstange (nicht gezeigt) kämmen.

Die Arbeitsweise der Stütze 10 wird nachstehend erläutert.

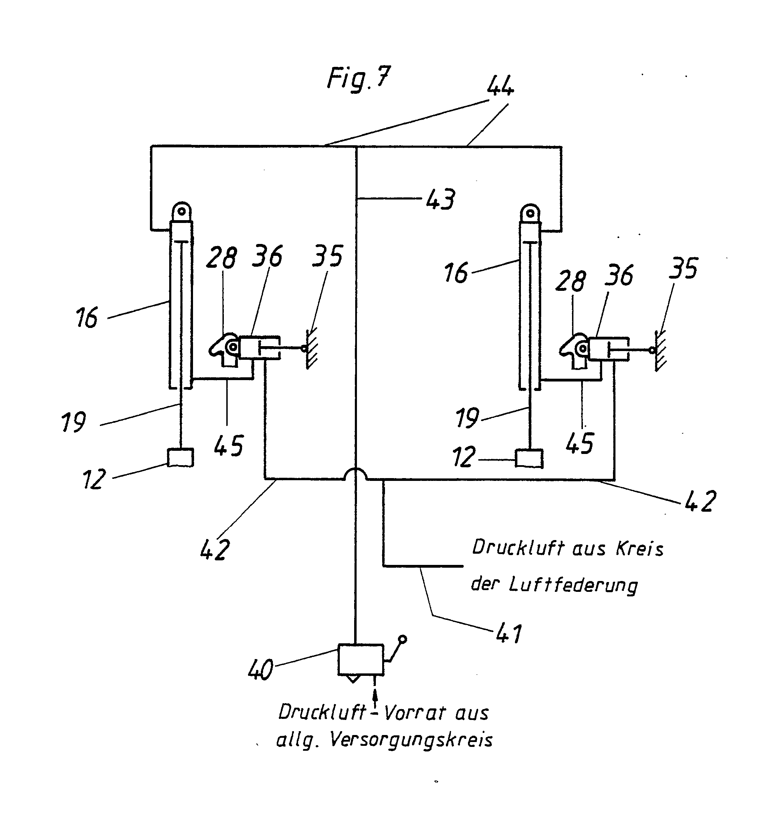

Wie schon oben erwähnt, werden die Betätigungszylinder 16 für die Stützen-Innenrohre 12 der zwei Stützen 10 eines Sattelaufliegers und auch die Betätigungsvorrichtungen 36 für die Rastklinken 28 mit Druckluft betrieben, die z.B. vom Druckluftvorrat des Bremssystems des Sattelaufliegers abgezweigt wird. Es kann sich aber auch um den Druckluftvorrat der Luftfederanlage des Sattelaufliegers handeln, was noch in Verbindung mit dem Ausführungsbeispiel nach Fig. 7 beschrieben wird. Mit der Bezugszahl 40 ist ein von Hand betätigbares Ventil bezeichnet, das neben den Stützen 10 oder auch im Führerhaus der Zugmaschine für den Sattelauflieger positioniert sein kann. Zum Ausfahren der Stützen 10 bzw. der Stützen-Innenrohre 12 wird das Ventil 40 entsprechend betätigt, wobei zunächst über die Druckluftleitungen 41, 42 die Betätigungsvorrichtungen 36 für die Rastklinken 28 aktiviert werden, um diese aus den Zahnlücken 38 entgegen dem Druck der Federn 37 auszuheben. Alsdann werden über die Druckluftleitungen 43, 44 die Betätigungszylinder 16 aktiviert, um über die Ritzel 21, die Stützen-Innenrohre 12 auszufahren. Die Rastklinken 28 ratschen federnd über die als Sägeverzahnung ausgebildeten Verzahnungen 24. Die Geschwindigkeit, mit der die Innenrohre 12 ausgefahren werden, beträgt das Zweifache der Kolbengeschwindigkeit der Betätigungszylinder 16. Auch der Hub der Innenrohre 12 ist doppelt so groß als der Kolbenhub. Gegen Ende dieses Vorgangs werden die Rastklinken 28 durch die Federn 37 in eine der Zahnlücken der Verzahnungen 24 eingerastet, um die Stützen 10 im ausgefahrenen Zustand zu verriegeln.

Zum Einfahren der Stützen 10 bzw. der Stützen-Innenrohre 12 in ihre Transport- oder Ruhestellungen wird das Ventil 40 in umgekehrter Richtung betätigt. Dadurch werden zunächst wieder die Betätigungsvorrichtungen 36 aktiviert über die Druckluftleitungen 41, 42, um die Rastklinken 28 auszuheben und mit entsprechender Verzögerung werden dann die pneumatischen Betätigungszylinder 16 über die Leitungen 41, 42, 45 aktiviert, um dies Innenrohre 12 einzufahren. Gegen Ende der Einfahrbewegung der Stützen-Innenrohre 12 werden die Rastklinken 28 durch die Druckfedern 37 wieder in die Zahnlücken 38 der teilverzahnten Stangen 15 eingerastet, um die Stützen-Innenrohre 12 in ihren Transport- oder Ruhestellungen zu verriegeln (Fig.1). Anstelle des handgesteuerten Ventils 40 kann auch eine automatische Steuerung vorgesehen sein, die z.B. mit ferngesteuerten Magnetventilen arbeitet.

Schließlich kann gemäß Fig. 7 ein halbautomatischer Steuerungsbetrieb erfolgen in der Art, daß die Stützen 10 automatisch mit der Aktivierung der Luftfederung des Sattelaufliegers eingefahren werden. Dies verringert die Notwendigkeit der bisher besonderen Sorgfalt des Fahrers vor dem Fahrtantritt. Die Druckluftleitungen 41, 42 sind hier direkt mit dem Druckluft-Kreis der Luftfederanlage des Sattelaufliegers verbunden.

Anstelle der pneumatischen Betätigungszylinder 16 können auch hydraulische Betätigungszylinder oder auch elektromotorische Spindelantriebe vorgesehen sein. Bei einem solchen Spindelantrieb wird der Elektromotor an der Kopfplatte 13 befestigt und die Spindel erstreckt sioh im wesentlichen achsparallel in das Stützen-Innenrohr 12 und durch eine entsprechende Gewindebohrung oder Mutter im Lagerstück 20 für das Ritzel 21.

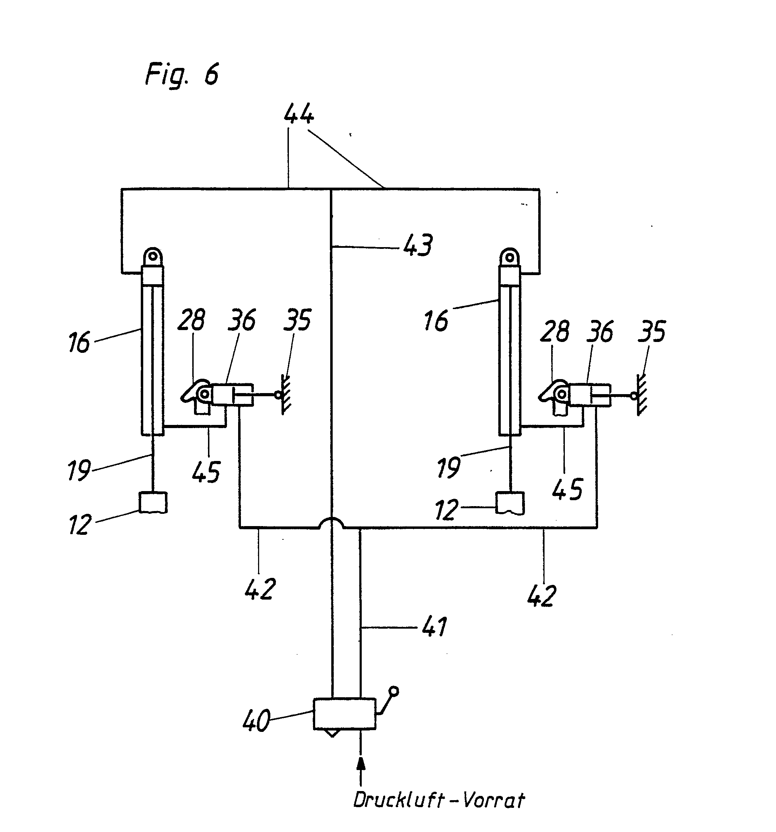

Bei beiden Ausführungsbeispielen nach Fig. 6 und 7 sind die Betätigungsvorrichtungen 36 und die Betätigungszylinder 16 so hintereinandergeschaltet, daß bei Druckluftzufuhr über die Leitungen 41, 42 die Betätigungsvorrichtungen 36 aktiviert werden. Sobald letztere ihre Endstellungen erreicht haben, wird die Druckluft weiter über die Leitungen 45 zu den Betätigungszylindern 16 geleitet. Diese Druckluftführung bezieht sich auf den Einfahrvorgang der Stützen 10.

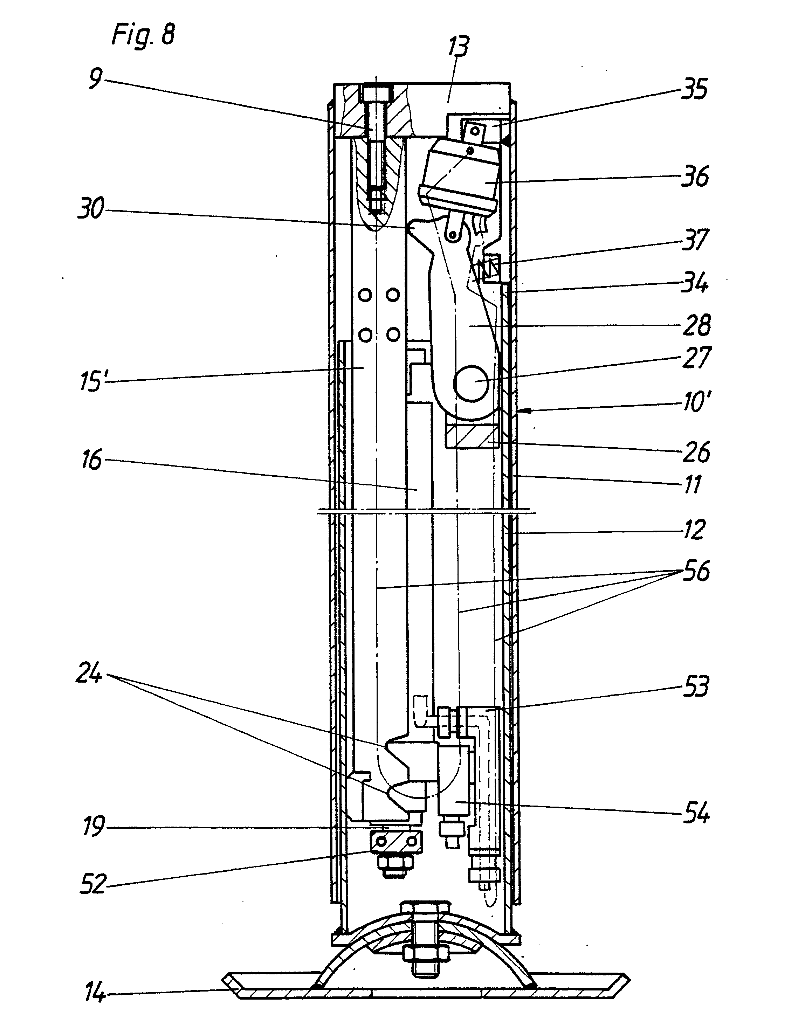

Die in den Figuren 8 - 13 gezeigte Stütze 10' ist gegenüber der Ausführungsform nach den Figuren 1 - 5 baulich vereinfacht bzw. teilesparender. Im übrigen sind gleiche Teile dieser Stütze 10' mit den selben Bezugszahlen wie bei der Ausführungsform nach den Figuren 1 - 5 gekennzeichnet. Die Stützen 10' werden gleichfalls paarweise am Rahmen eines Sattelaufliegers in dessen vorderen Bereich befestigt und sind gleichartig, so daß die Beschreibung von einer derselben genügt.

Die Stütze 10' weist ebenfalls ein Außenrohr 11 und ein in diesem längsverschieblich gelagertes Innenrohr 12 auf, wobei beide Rohre 11, 12 vorzugsweise aus Vierkantrohren bestehen. Am unteren Ende des Innenrohres 12 ist beispielsweise eine Fußplatte 14 vorgesehen. An der am Außenrohr 11 befestigten Kopfplatte 13 ist mittels Schrauben 9 achsparallel ein stangenförmiges Teil 15' befestigt, das zwei Zahnlücken 24 an seinem unteren Ende aufweist. In eine dieser Zahnlücken 24 greift bei ausgefahrener Stütze 10' die Rastklinke 28 mit ihrem Klinkenzahn 30 ein, um die Stütze 10' in ihrem ausgefahrenen Zustand zu verriegeln (Fig.9). Beim Ein- und Ausfahren des Stützen-Innenrohres 12 gleitet der Klinkenzahn 30 einfach über das stangenförmige Teil 15'.

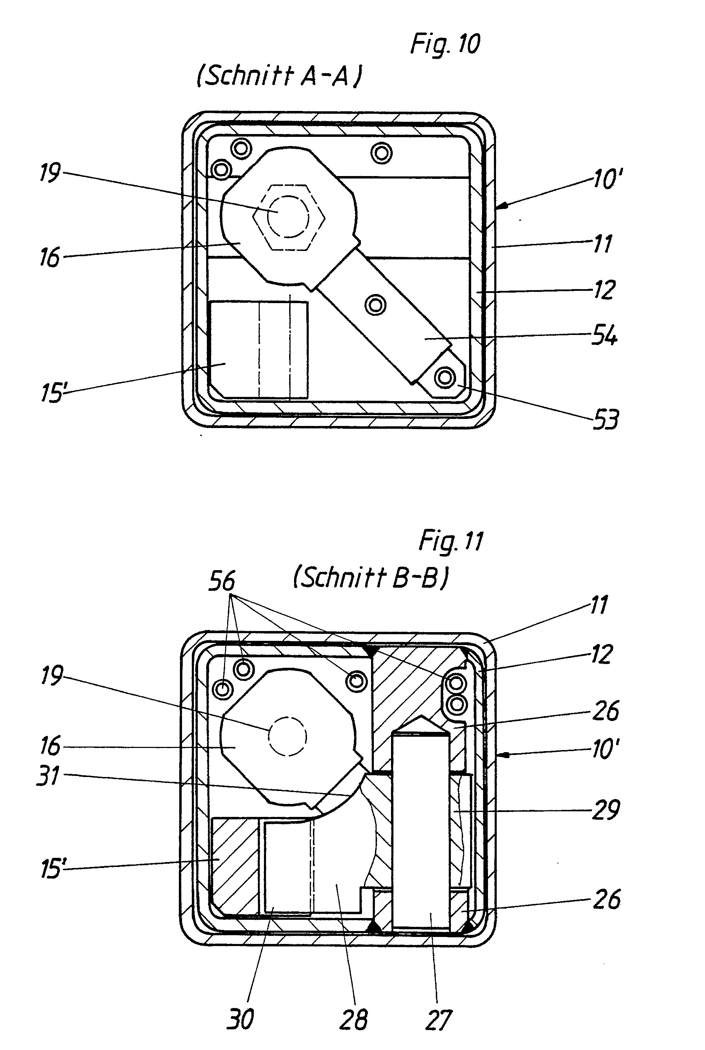

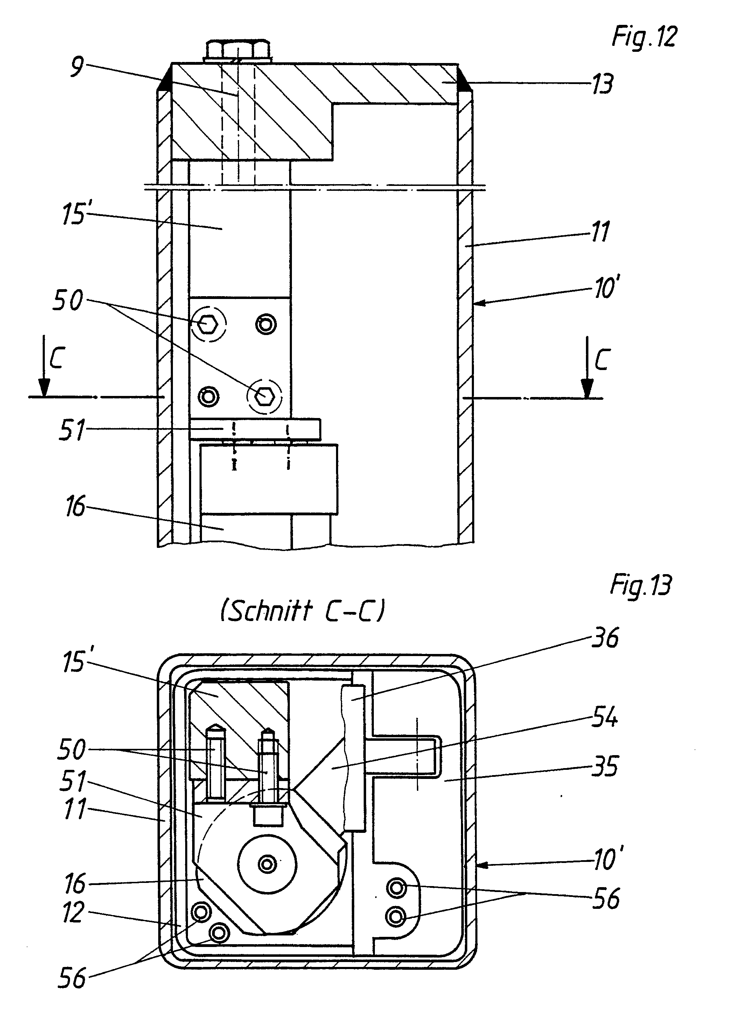

An dem stangenförmigen Teil 15' ist nahe seinem oberen Ende mittels Schrauben und Stifte 50 eine seitlich schräg vom stangenförmigen Teil 15' abstehende Konsole 51 befestigt, an der wiederum der Betätigungszylinder 16 befestigt ist. Der Betätigungszylinder 16 erstreckt sich im Innenrohr 12 achsparallel zum stangenförmigen Teil 15', jedoch gegenüber diesem etwas seitlich versetzt (Fig.12 und 13). Die Kolbenstange 19 des Betätigungszylinders 16 ist an ihrem unteren freien Ende mit einem Anschlußstück 52 fest verbunden, z.B. verschraubt. Das Anschlußstück 52 ist querverlaufend mit beiden Enden am Stützen-Innenrohr 12 nahe dessen unteren Ende befestigt. Über diese Verbindung kann durch den Betätigungszylinder 16 bei dessen Aktivierung das Stützen-Innenrohr 12 ein- und ausgefahren werden. Mit den Bezugszahlen 53 und 54 sind ein Verteiler bzw. ein Ventil der pneumatischen Steuerung für den Betätigungszylinder 16 und die Betätigungsvorrichtung 36 für die Rastklinke 28 bezeichnet. Die Teile 53 und 54 werden vom Betätigungszylinder 16 getragen (Fig.10). Aufbau und Arbeitsweise der Betätigungsvorrichtung 36 für die Rastklinke 28 entsprechen den bereits in Verbindung mit den Figuren 1 - 5 beschriebenen und auch die Funktion der Stütze 10' ist gleich derjenigen der Stütze 10 der Figuren 1 - 5. Von Bedeutung für beide Ausführungsformen ist, daß das stangenförmige Teil 15 bzw. 15' achsparallel seitlich neben dem Betätigungszylinder 16 angeordnet ist und die Rastklinke 28 mit ihrer Betätigungsvorrichtung 36 im oberen Endbereich an einer gegenüberliegenden Seitenwand des Stützen-Innenrohres 12 angeordnet ist, wodurch man mit dem beschränkten Aufnahmevolumen des Innenrohres 12 für diese Bauteile auskommt.

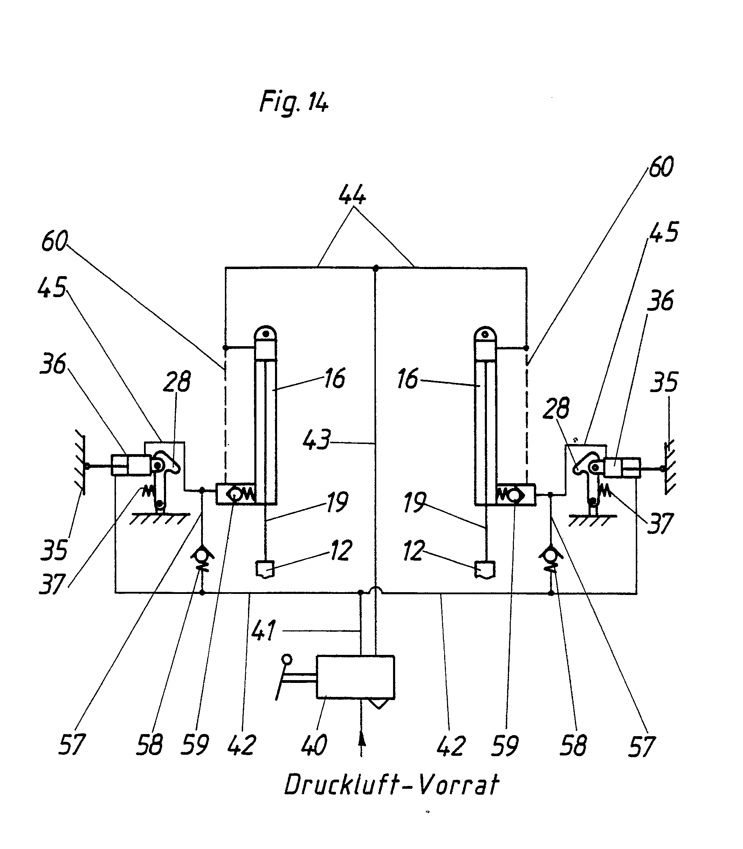

Die drei in den Figuren 14, 15 und 16 gezeigten, unterschiedlichen pneumatischen Steuerungen können für die Betätigungszylinder 16 der Stützen-Innenrohre 12 und die Betätigungsvorrichtungen 36 für die Rastklinken 28 von zwei Stützen 10 (Fig. 1 - 5) oder 10' (Fig. 8 - 13) verwendet werden.

Die handbetätigte pneumatische Steuerung nach Figur 14 entspricht im wesentlichen derjenigen nach Figur 6. Zusätzlich sind jedoch zwischen den Druckluftleitungen 42 und 45 weitere Leitungen 57 mit eingebauten Rückschlagventilen 58 vorgesehen und außerdem ist jeder Betätigungszylinder 16 mit einem pneumatisch entsperrbaren Rückschlagventil 59 ausgerüstet, zu welchen von den Druckluftleitungen 44 abgezweigte Steuerleitungen 60 geführt sind. Um die Stützen 10 oder 10' bzw. Stützen-Innenrohre 12 auszufahren, wird das Ventil 40 von Hand entsprechend betätigt. Über die Druckluftleitungen 41, 42 werden die Betätigungsvorrichtungen 36 für die Rastklinken 28 aktiviert, um im Falle der Ausführungsform nach den Figuren 1 - 5 zunächst die Rastklinken 28 aus den Zahnlücken 38 auszurücken. Beim Ausführungsbeispiel nach den Figuren 8 - 13 entfällt dieser Vorgang, da der Klinkenzahn 30 auf einem geradlinigen Abschnitt des stangenförmigen Teils 15' aufliegt. Über die Druckluftleitungen 43, 44 werden dann die Betätigungszylinder 16 mit Druck beaufschlagt, wodurch die Stützen-Innenrohre 12 ausgefahren werden. Dies ist jedoch nur möglich, weil gleichzeitig über die Steuerleitungen 60 die pneumatisch entsperrbaren Rückschlagventile 59 aufgesteuert bzw. geöffnet werden, so daß die Luft aus den Zylindern 16 ausströmen kann. Die Klinkenzähne 30 der Rastklinken 28 schleifen dabei über die geradlinigen Abschnitte der stangenförmigen Teile 15' bzw. im Falle der Ausführungsform nach den Figuren 1 - 5 ratschen die Klinken 28 federnd über die Verzahnungen 24. Am Ende dieses Vorganges werden die Rastklinken 28 durch die Federn 37 in eine der Zahnlücken 24 eingerastet, wodurch die Stützen 10 oder 10' im ausgefahrenen Zustand gesichert sind. Die Rückschlagventile 58 in den Leitungen 57 ermöglichen beim Ausfahren der Kolbenstangen 19 der Betätigungszylinder 16 das Entweichen der Luft hinter den Rückschlagventilen 59 über die Leitungen 42 und 41.

Wenn die Stützen 10 bzw. 10' in ihre Transport- oder Ruhestellung eingefahren werden sollen, wird das Ventil 40 im umgekehrten Sinn betätigt. Dadurch werden über die Druckluftleitungen 41, 42 zunächst die Betätigungsvorrichtungen 36 in Funktion gesetzt, um die Rastklinken 28 auszurücken und anschließend werden die pneumatischen Betätigungszylinder 16 über die Leitungen 41, 42, 45 aktiviert, um die Innenrohre 12 einzufahren. Die Rückschlagventile 59 sind dabei geöffnet, die Rückschlagventile 58 jedoch gesperrt. Sobald die Stützen-Innenrohre 12 der Stützen 10' ihre Transport- oder Ruhestellungen erreicht haben, werden sie in diesen Stellungen durch die Rückschlagventile 59 gesichert, die ein Entweichen der in den Betätigungszylindern 16 vorhandenen Druckluftsäule verhindern.

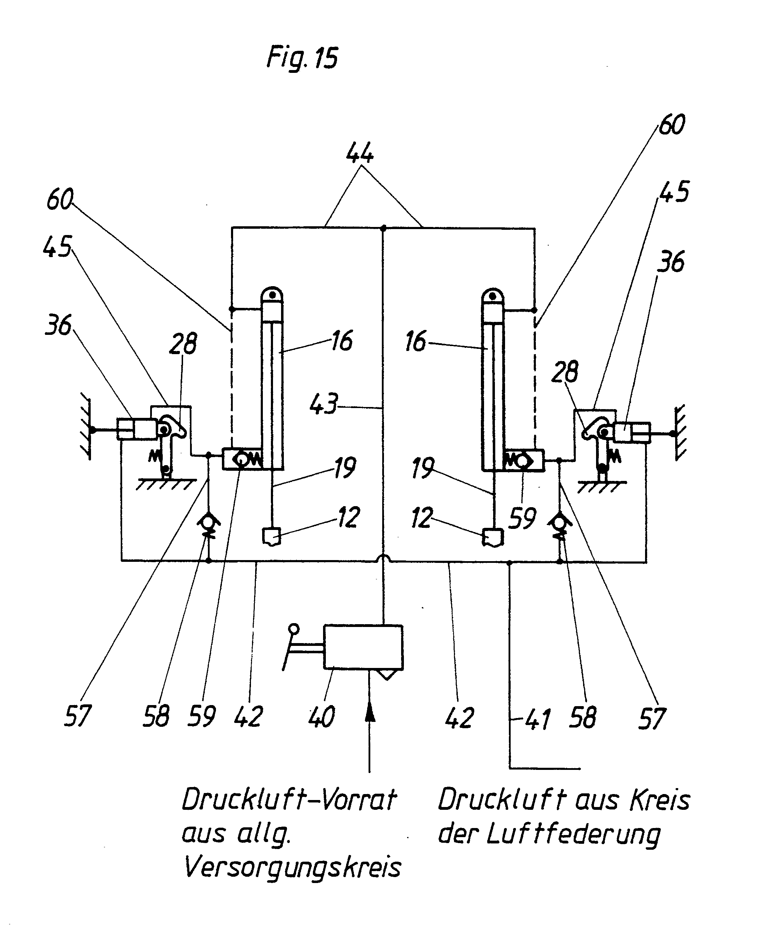

Die pneumatische Steuerung nach Figur 15 ermöglicht, ähnlich wie Figur 7, einen halbautomatischen Steuerungsbetrieb. Die Stützen 10 oder 10' können damit bei Aktivierung der Luftfederung des Sattelaufliegers, also während der Füllung der Luftfederung selbsttätig eingefahren werden. Die Druckluftleitungen 41, 42 werden unmittelbar mit Druckluft aus dem Kreis der Luftfederung des Sattelaufliegers versorgt, während über das handgesteuerte Ventil 40 den Leitungen 43 und 44 Druckluft aus dem Vorrat des allgemeinen Versorgungskreises des Sattelaufliegers zugeführt werden kann, um die Stützen 10 oder 10' im Handbetrieb auszufahren. Vereinfacht ausgedrückt, das Ausfahren der Stützen 10 oder 10' wird von Hand gesteuert, während ihr Einfahren automatisch erfolgt. Die Funktion der Rückschlagventile 58 und 59 entspricht der in Verbindung mit Figur 14 beschriebenen.

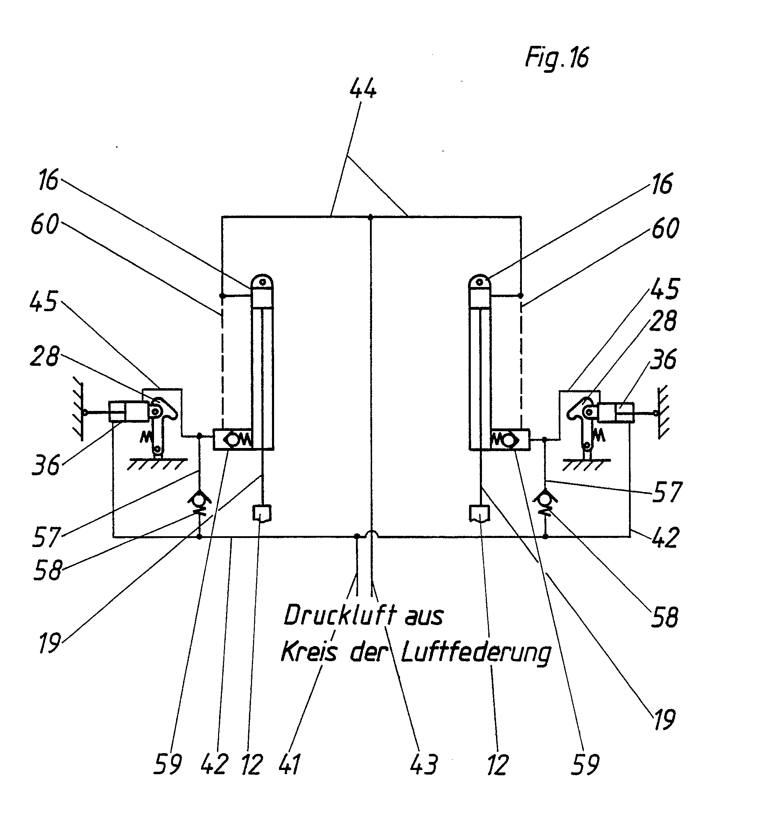

Die Figur 16 zeigt eine pneumatische Steuerung, mittels der die Stützen 10 oder 10' beim Auffüllen und Entlüften der Luftfederanlage des Sattelaufliegers vollautomatisch ein- bzw. ausgefahren werden können. Zu diesem Zweck sind die Druckluftleitungen 41 und 43 unmittelbar an dem Druckluftkreis der Luftfederanlage des Sattelaufliegers angeschlossen. Bei Aktivierung der Luftfederung strömt Druckluft über die Druckluftleitungen 41, 42 zu den Betätigungsvorrichtungen 36 für die Rastklinken 28 und etwas verzögert über die Leitungen 45 zu den Betätigungszylindern 16, um die Stützen-Innenrohre 12 einzufahren. Bei Entlüftung der Luftfederung werden die Stützen 10 oder 10' automatisch ausgefahren. Auch bei diesem Ausführungsbeispiel ist die Funktion der Rückschlagventile 58 und 59 gleich derjenigen, die in Verbindung mit Figur 14 und 15 beschrieben wurde.

**Patentansprüche**

1. Höhenverstellbare Stütze für Sattelauflieger oder dergleichen, mit einem ortsfest angeordneten Außenrohr und einem im Außenrohr längsverschiebbar angeordneten Innenrohr, das an seinem äußeren Ende ein Fußteil, z.B. eine Fußplatte oder Rolle oder Rollsegment(e) trägt, wobei das Stützen-Innenrohr durch eine mit dem Stützen-Außenrohr verbundene, motorische Antriebsvorrichtung nach oben oder unten verstellbar ist, dadurch gekennzeichnet, daß

   a) die motorische Antriebsvorrichtung für das Stützen-Innenrohr (12) ein in den Hohlraum der Stütze (10) im wesentlichen achsparallel eingebauter Betätigungszylinder (16) oder motorischer Spindelantrieb ist, dessen Kolbenstange (19) bzw. Antriebsspindel mit dem Stützen-Innenrohr (12) verbunden ist,

   b) im Stützen-Außenrohr (11) ein Teil (15) mit wenigstens einer Zahnlücke (24) eingebaut ist- und

   c) am oberen Endbereich des Stützen-Innenrohrs (12) eine Rastklinke (28) gelagert ist, die mit einer motorischen Betätigungsvorrichtung (36) verbunden ist und mit ihrem Klinkenzahn (30) in der ausgefahrenen Arbeitsstellung des Stützen-Innenrohrs (12) in die Zahnlücke (24) des im Stützen-Außenrohr (11) eingebauten Teils (15) einrastbar ist.

2. Stütze nach Anspruch 1, dadurch gekennzeichnet, daß das im Stützen-Außenrohr (11) eingebaute Teil (15) mit wenigstens zwei vertikal beabstandeten Zahnlücken (24, 38) versehen ist, und daß die Rastklinke (28) in der Arbeits- und Transportstellung (Ruhestellung) des Stützen-Innenrohrs (12) in jeweils eine dieser Zahnlücken (24, 38) einrastbar ist.

3. Stütze nach Anspruch 2, dadurch gekennzeichnet, daß das im Stützen-Außenrohr (11) eingebaute und mit der Rastklinke (28) zusammenarbeitende Teil durch eine nur teilverzahnte Stange (15) gebildet ist.

4. Stütze nach Anspruch 2, dadurch gekennzeichnet, daß das im Stützen-Außenrohr (11) eingebaute und mit der Rastklinke (28) zusammenarbeitende Teil durch eine Zahnstange gebildet ist.

5. Stütze nach einem der Ansprüche 1 - 4, dadurch gekennzeichnet, daß am oberen Ende des Stützen-Außenrohrs (11) eine Kopfplatte (13) vorgesehen ist, an der die teilverzahnte Stange (15) bzw. Zahnstange und der Betätigungszylinder (16) oder der motorische Spindelantrieb befestigt sind.

6. Stütze nach einem der Ansprüche 1 - 5, dadurch gekennzeichnet, daß die Kolbenstange (19) des Betätigungszylinders (16) oder die Spindel des motorischen Spindelantriebs an ihrem freien Ende ein Ritzel (21) trägt, das mit der im Stützen-Außenrohr (11) eingebauten teilverzahnten Stange (15) oder Zahnstange und einer am Stützen-Innenrohr (12) befestigten Zahnstange (25) kämmt.

7. Stütze nach einem der Ansprüche 3 - 6, dadurch gekennzeichnet, daß bei einer Stütze (10) aus Vierkantrohren der Betätigungszylinder (16) und die teilverzahnte Stange (15) bzw. Zahnstange seitlich nebeneinander am Stützen-Außenrohr (11) befestigt sind, während die Zahnstange (25) am Stützen-Innenrohr (12) im wesentlichen diagonal gegenüber der teilverzahnten Stange (15) bzw. Zahnstange am Außenrohr (11) angeordnet ist.

8. Stütze nach einem der Ansprüche 1 - 7, dadurch gekennzeichnet, daß der Lagerabschnitt (29) der Rastklinke (28) seitlich von deren Klinkenzahn (30) versetzt ist und die Rastklinke (28) mit einem bogenförmigen Abschnitt (31) an dem Betätigungszylinder (16) vorbeigeführt ist.

9. Stütze nach Anspruch 1, dadurch gekennzeichne, daß der Betätigungszylinder (16) für das Stützen-Innenrohr (12) und auch die motorische Betätigungsvorrichtung (36) für die Rastklinke (28) mit Druckluft betrieben werden.

10. Stütze nach Anspruch 9, dadurch gekennzeichnet, daß der Betätigungszylinder (16) des Stützen-Innenrohrs (12) und die Betätigungsvorrichtung (36) der Rastklinke (28) an der gleichen Druckluftquelle angeschlossen sind, z.B. an dem Druckluftvorrat für die Luftfederanlage oder Bremsanlage des Sattelaufliegers.

11. Stütze nach Anspruch 9 oder 10, dadurch gekennzeichnet, daß der Betätigungszylinder (16) des Stützen-Innenrohrs (12) und die Betätigungsvorrichtung (36) der Rastklinke (28) durch ein von Hand oder automatisch betätigbares Ventil (40) so in Folge gesteuert werden, daß beim Ein- und Ausfahren des Stützen-Innenrohrs (12) zunächst die Betätigungsvorrichtung (36) für die Rastklinke (28) und dann mit etwas Verzögerung der Betätigungszylinder (16) für das Stützen-Innenrohr (12) aktiviert werden.

12. Stütze nach einem der vorhergehenden Ansprüche, dadurch gekennzeichnet, daß beim Auffüllen der Luftfederanlage des Sattelaufliegers die Betätigungsvorrichtungen (36) und Betätigungszylinder (16) der Stützen-Innenrohre (12) selbsttätig aktiviert werden, um die Stützen-Innenrohre (12) einzufahren.

13. Stütze nach einem der vorhergehenden Ansprüche, dadurch gekennzeichnet, daß die Betätigungsvorrichtung (36) und der Betätigungszylinder (16) pneumatisch oder hydraulisch so hintereinander geschaltet sind und die Betätigungsvorrichtung (36) so ausgebildet ist, daß bei Druckmittelzufuhr die Betätigungsvorrichtung (36) eine Stellbewegung ausführt und beim Erreichen der Endstellung das Druckmittel weiter zum Betätigungszylinder (16) strömt.

14. Stütze nach einem der vorhergehenden Ansprüche, dadurch gekennzeichnet, daß das Ritzel (21) mit einer im Stützen-Außenrohr (11) zusätzlich eingebauten Zahnstange oder teilverzahnten Stange und mit der am Stützen-Innenrohr (12) befestigten Zahnstange (25) kämmt.

15. Stütze nach Anspruch 1, dadurch gekennzeichnet, daß die Kolbenstange (19) des Betätigungszylinders (16) oder die Spindel des motorischen Spindelantriebs mit ihrem unteren freien Ende über ein im Stützen-Innenrohr (12) befestigtes Anschlußstück (52) direkt mit dem Stützen-Innenrohr (12) verbunden ist.

16. Stütze nach Anspruch 1 oder 15, dadurch gekennzeichnet, daß am oberen Ende des Stützen-Außenrohres (11) eine Kopfplatte (13) angeordnet ist, an der das stangenförmige Teil (15') mit wenigstens einer Zahnlücke (24) befe-

**EP 0 460 396 A2**

stigt ist, und daß das stangenförmige Teil (15') über eine angebaute Konsole (51) den Betätigungszylinder (16) oder den motorischen Spindelantrieb trägt.

17. Stütze nach einem der vorhergehenden Ansprüche, dadurch gekennzeichnet, daß die Betätigungszylinder (16) der Stützen-Innenrohre (12) und die Betätigungsvorrichtungen (36) der Rastklinken (28) über ein von Hand betätigbares Ventil (40) an einem Druckluftvorrat des Bremssystems des Sattelaufliegers und ferner direkt an der Luftfederanlage des Sattelaufliegers anschließbar sind.

18. Stütze nach einem der vorhergehenden Ansprüche, dadurch gekennzeichnet, daß beim Auffüllen und Entlüften der Luftfederanlage des Sattelaufliegers die Betätigungsvorrichtungen (36) für die Rastklinken (28) und Betätigungszylinder (16) der Stützen-Innenrohre (12) selbsttätig aktiviert werden, um die Stützen-Innenrohre (12) automatisch ein- bzw. auszufahren.

Fig.1

Fig. 2

Fig.3    Schnitt  A-A

Fig.4    Schnitt B-B

Fig.5

Fig. 6

Druckluft–Vorrat

Fig.7

Druckluft aus Kreis
der Luftfederung

Druckluft-Vorrat aus
allg. Versorgungskreis

**Fig. 8**

Fig. 9

Fig. 10

(Schnitt A-A)

Fig. 11

(Schnitt B-B)

**Fig.12**

**Fig.13**

**(Schnitt C–C)**

19

## Fig. 14

Druckluft-Vorrat

Fig. 15

Druckluft-Vorrat
aus allg.
Versorgungskreis

Druckluft aus Kreis
der Luftfederung

Fig.16

Druckluft aus
Kreis der Luftfederung